(19) Europäisches Patentamt
European Patent Office
Office européen des brevets

(11) **EP 2 733 959 A1**

(12) **EUROPEAN PATENT APPLICATION**
published in accordance with Art. 153(4) EPC

(43) Date of publication:
**21.05.2014 Bulletin 2014/21**

(21) Application number: **12811519.3**

(22) Date of filing: **12.07.2012**

(51) Int Cl.:
**H04R 17/00** (2006.01)   **G01F 1/66** (2006.01)
**H04R 31/00** (2006.01)

(86) International application number:
**PCT/JP2012/004515**

(87) International publication number:
**WO 2013/008470 (17.01.2013 Gazette 2013/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2011   JP 2011154548**

(71) Applicant: **Panasonic Corporation**
**Osaka 571-8501 (JP)**

(72) Inventors:
• **NAKANO,Makoto**
**Osaka 540-6207 (JP)**
• **SATOU, Masato**
**Osaka 540-6207 (JP)**

• **ADACHI, Akihisa**
**Osaka 540-6207 (JP)**
• **NISHIDA, Satoru**
**Osaka 540-6207 (JP)**
• **NAKASHITA, Takashi**
**Osaka 540-6207 (JP)**
• **TANIGAKI, Yoshikazu**
**Osaka 540-6207 (JP)**

(74) Representative: **Schwabe - Sandmair - Marx**
**Patentanwälte**
**Stuntzstraße 16**
**81677 München (DE)**

(54) **METHOD FOR MANUFACTURING ACOUSTIC MATCHING BODY, ACOUSTIC MATCHING BODY, ULTRASONIC TRANSDUCER USING ACOUSTIC MATCHING BODY, AND ULTRASONIC FLOWMETER**

(57)    Provided are an acoustic matching member with a fixed density, an ultrasonic transmitter/receiver unit with a high sensitivity, and an ultrasonic flow meter device which attains stable and high-accurate flow measurement. An acoustic matching member (19) comprises hollow elements and a binding agent. The acoustic matching member (19) is created by removing hollow elements (3) having higher densities, hollow elements (4) having cracks, etc., from hollow elements (2) before sorting-out. Since the hollow elements (3) having higher densities, the hollow elements (4) having cracks, etc., are removed from hollow elements (2) before sorting-out, it becomes possible to provide an acoustic matching member having fixed characteristics without being affected by a manufacturing lot and a transportation process of the hollow elements. An ultrasonic transmitter/receiver unit created using the acoustic matching member has fixed characteristics and is able to perform high-accurate flow measurement.

FIG. 8

## Description

## Technical Field

The present invention relates to a manufacturing method of an acoustic matching member for use in an ultrasonic transmitter/receiver unit for transmitting an ultrasonic wave into a fluid or receiving the ultrasonic wave propagating through the fluid, the acoustic matching member manufactured by the method, the ultrasonic transmitter/receiver unit incorporating the acoustic matching member, and an ultrasonic flow meter device incorporating the ultrasonic transmitter/receiver unit.

## Background Art

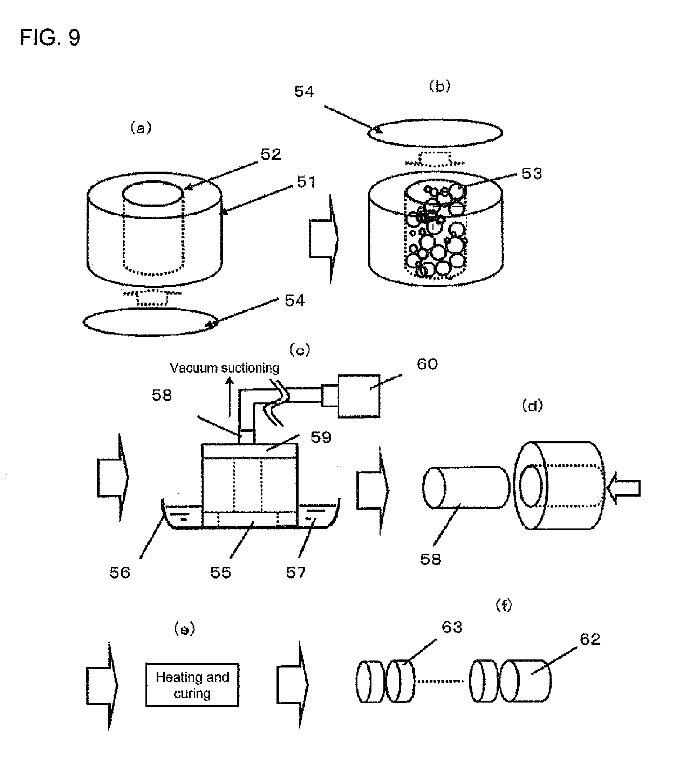

Conventionally, an ultrasonic matching member incorporated into an ultrasonic transmitter/receiver unit comprises hollow elements 53 and a binding agent 57 and is manufactured by, for example, a method shown in Fig. 9. Specifically, a matching layer manufacturing jig 51 having a through-hole 52 is prepared, and the hollow elements 53 are injected into the through-hole 52 and filled therein while vibrating the entire matching layer manufacturing jig 51. Then, the hollow elements 53 are impregnated with an epoxy resin which is a thermosetting resin compound as the binding agent 57 and are heated for curing. Thus, a cured body is produced. Then, the cured body is sliced to have a particular thickness, to form an acoustic matching member 63 (see, e.g., Patent Literature 1).

## Citation List

## Patent Literature

Patent Literature 1: Japanese Patent No. 4140359

## Summary of Invention

## Technical Problem

However, the hollow elements include hollow elements having higher densities, hollow elements having lower densities, hollow elements having cracks, etc.. In addition, the ratio of these hollow elements to the total hollow elements is varied depending on a manufacturing lot of the hollow elements, or varied depending on a transportation process of the hollow elements. Thus, in the above stated conventional manufacturing method, the acoustic matching member is manufactured using as a raw material the hollow elements which are varied depending on the manufacturing lot and the transportation process. Therefore, the conventional manufacturing method has a problem that a density of the acoustic matching member is not fixed, and as a result, characteristics of an ultrasonic transmitter/receiver unit incorporating the acoustic matching member are not fixed.

The present invention is directed to solving the problem associated with the prior art, and an object of the present invention is to provide an acoustic matching member having fixed characteristics and an ultrasonic transmitter/receiver unit having fixed characteristics, without being affected by a manufacturing lot and a transportation process of hollow elements, and to provide an ultrasonic flow meter device which is capable of implementing stable and high-accurate flow measurement.

## Solution to Problem

To solve the problem associated with the prior art, there is provided a method of manufacturing an acoustic matching member which is placed on a piezoelectric transducer to construct an ultrasonic transmitter/receiver unit together with the piezoelectric transducer, the method comprising the steps of: obtaining a group of third hollow elements having lower densities by removing second hollow elements having higher densities from a group of first hollow elements including hollow elements which are different in density; and creating the acoustic matching member using the group of the third hollow elements and a binding agent.

With this method, the second hollow elements having higher densities (including the hollow elements having cracks) are removed from the first hollow elements. This makes it possible to provide the acoustic matching member having fixed characteristics without being affected by a manufacturing lot and a transportation process of the hollow elements. In addition, the ultrasonic transmitter/receiver unit manufactured using the acoustic matching member has fixed characteristics, and an ultrasonic flow meter device incorporating the ultrasonic transmitter/receiver unit is able to perform high-accurate flow measurement.

## Advantageous Effects of Invention

An acoustic matching member of the present invention has a fixed density, an ultrasonic transmitter/receiver unit incorporating the acoustic matching member has fixed characteristics, and a flow meter device incorporating the acoustic matching member is able to perform high-accurate flow measurement.

## Brief Description of Drawings

   [Fig. 1] Fig. 1 (a-b) is view showing the steps of removing hollow elements having higher densities according to Embodiment 1 of the present invention.
   [Fig. 2] Fig. 2A is a SEM photograph of hollow elements before removing hollow elements having higher densities and hollow elements having cracks, and 2B is a SEM photograph of hollow elements obtained by removing the hollow elements having higher densities and the hollow elements having cracks, according to Embodiment 1 of the present invention.

[Fig. 3] Fig. 3 is a view showing the steps of manufacturing the acoustic matching member according to Embodiment 1 of the present invention.

[Fig. 4] Fig. 4A is a view showing the density of the acoustic matching member incorporating the conventional hollow elements, and Fig. 4B is a view showing the density of the acoustic matching member incorporating the hollow elements of Embodiment 1 of the present invention.

[Fig. 5] Fig. 5A is a view showing the output of an ultrasonic transmitter/receiver unit incorporating the acoustic matching member manufactured by the conventional manufacturing method, and Fig. 5B is a view showing the output of an ultrasonic transmitter/receiver unit incorporating the acoustic matching member according to Embodiment 1 of the present invention.

[Fig. 6] Fig. 6 (a-d) is a view showing the procedure for manufacturing the ultrasonic transmitter/receiver unit according to Embodiment 1 of the present invention.

[Fig. 7] Fig. 7 is a partial cross-sectional view of an ultrasonic flow meter device according to Embodiment 1 of the present invention.

[Fig. 8] Fig. 8(a-e) is a view showing the steps of removing hollow elements having higher densities and hollow elements having cracks according to Embodiment 2 of the present invention.

[Fig. 9] Fig. 9 is a view showing the steps of manufacturing the conventional acoustic matching member.

**Description of Embodiments**

According to a first aspect of the present invention, there is provided a method of manufacturing an acoustic matching member which is placed on a piezoelectric transducer to construct an ultrasonic transmitter/receiver unit together with the piezoelectric transducer, the method comprising the steps of: obtaining a group of third hollow elements having lower densities by removing second hollow elements having higher densities from a group of first hollow elements including hollow elements which are different in density; and creating the acoustic matching member using the group of the third hollow elements and a binding agent. With this method, the second hollow elements having higher densities (including the hollow elements having cracks) are removed from the first hollow elements. This makes it possible to provide the acoustic matching member having fixed characteristics without being affected by a manufacturing lot and a transportation process of the hollow elements. In addition, the ultrasonic transmitter/receiver unit manufactured using the acoustic matching member has fixed characteristics, which enables high-accurate flow measurement.

According to a second aspect of the present invention, in the method of the first aspect, the step of obtaining the group of the third hollow elements may include the step of causing the group of the first hollow elements to move down in a liquid having a higher density than the third hollow elements having lower densities, and the step of separating the third hollow elements floating on a liquid surface, from the liquid. With this method, the second hollow elements having higher densities are efficiently removed from the first hollow elements. This makes it possible to provide the acoustic matching member having fixed characteristics without being affected by a manufacturing lot and a transportation process of the hollow elements. In addition, the ultrasonic transmitter/receiver unit manufactured using the acoustic matching member has fixed characteristics, which enables high-accurate flow measurement.

According to a third aspect of the present invention, in the method of the second aspect, in the step of causing the group of the first hollow elements to move down in the liquid having a higher density than the first hollow elements, the liquid and the first hollow elements may be stored into a pipe and mixed therein. This makes it possible to continuously remove the second hollow elements having higher densities from the first hollow elements.

According to a fourth aspect of the present invention, in the method of the second aspect, in the step of causing the group of the first hollow elements to move down in the liquid having a higher density than the third hollow elements, the liquid and the first hollow elements may be stirred and mixed in an interior of a container. With this method, the second hollow elements having higher densities are efficiently removed from the first hollow elements.

According to a fifth aspect of the present invention, in the method of any one of the second to fourth aspects, the step of causing the group of the first hollow elements to move down in the liquid having a higher density than the third hollow elements, may be carried out in a pressure-reduced atmosphere. This makes it possible to efficiently remove the hollow elements having small cracks, etc..

According to a sixth aspect of the present invention, the method of any one of the first to fifth aspects may include the step of pre-coating surfaces of the first hollow elements with a coupling agent. This makes it possible to improve an adhesivity between the hollow elements and the binding agent. Therefore, reliability of a moisture resistance is improved. In addition, a sliding characteristic of the hollow elements is improved because of the coupling agent applied as the coating layer to the surfaces of the hollow elements. Therefore, in the step of filling the hollow elements, the hollow elements are filled efficiently, and its filling efficiency is improved. As a result, the density of the acoustic matching member is decreased, the transmission/reception sensitivity of the ultrasonic transmitter/receiver unit incorporating the acoustic matching member is improved, and the high-accurate flow measurement is achieved.

According to a seventh aspect of the present invention, in the method of any one of the second to fifth aspects, the step of causing the group of the first hollow elements to move down in the liquid having a higher density than the third hollow elements may include the step of causing the first hollow elements to move down in the liquid dissolved with a coupling agent and separating the third hollow elements floating on the liquid surface, from the liquid. Thus, the second hollow elements having higher densities can be removed, and the surfaces of the hollow elements can be coated with the coupling agent. That is, inexpensive hollow elements can be used, and the hollow elements having higher densities can be removed. Therefore, it becomes possible to implement the acoustic matching member having a fixed density and is inexpensive.

According to an eighth aspect of the present invention, in the method of the sixth or seventh aspect, the coupling agent may be a high polymer compound selected from a group consisting of a chrome based compound, a silane based compound, a titanate based compound, and a phosphoric acid based compound. This allows the coupling agent to be easily applied as a coating layer to the surfaces of the hollow elements. In addition, the coupling agent applied as the coating layer to the surfaces of the hollow elements can improve a sliding characteristic of the hollow elements.

An acoustic matching member according to a ninth aspect of the present invention is an acoustic matching member placed on a piezoelectric transducer to construct an ultrasonic transmitter/receiver unit together with the piezoelectric transducer, the acoustic matching member being manufactured by the manufacturing method according to any one of the first to eighth aspect.

According to a tenth aspect of the present invention, an ultrasonic transmitter/receiver unit comprises a tubular metal case with a top portion, having an opening; a piezoelectric substrate accommodated into the case; a terminal connected to the piezoelectric substrate via an electrically-conductive means; and a terminal plate which closes the opening of the case and supports the terminal such that the terminal protrudes to outside, the ultrasonic transmitter/receiver unit being configured such that the acoustic matching member as recited in claim 9 is attached to an ultrasonic wave radiation surface of the case. This makes it possible to suppress degradation of a silver electrode provided on the piezoelectric substrate, and implement the ultrasonic transmitter/receiver unit which is highly reliable. In addition, since the piezoelectric substrate does not contact a measurement target gas, a flow of a combustible gas and the like can be measured safely.

According to an eleventh aspect of the present invention, an ultrasonic flow meter device comprises a flow measuring section through which a measurement target fluid flows; a pair of ultrasonic transmitter/receiver units placed at an upstream side and a downstream side of the flow measuring section such that the ultrasonic transmitter/receiver units face each other; an ultrasonic wave propagation time measuring circuit for measuring a propagation time of an ultrasonic wave between the pair of ultrasonic transmitter/receiver units; and a calculating means for calculating a flow of the measurement target fluid per unit time, based on the propagation time of the ultrasonic wave obtained by the ultrasonic wave propagation time measuring circuit; wherein each of the ultrasonic transmitter/receiver units is the ultrasonic transmitter/receiver unit according to the tenth aspect. This makes it possible to provide the acoustic matching member having fixed characteristics without being affected by a manufacturing lot and a transportation process of the hollow elements. In addition, the ultrasonic transmitter/receiver unit manufactured using the acoustic matching member has fixed characteristics, which enables high-accurate flow measurement.

Hereinafter, embodiments of the present invention will be described with reference to the drawings. Note that the present invention is not limited by the embodiments.

**(Embodiment 1)**

A manufacturing method of an acoustic matching member according to the present embodiment roughly includes the step of sorting-out the hollow elements (first step) and the step of creating the acoustic matching member using the hollow elements after sorting-out and a binding agent (second step). The first step is the step of obtaining a group of third hollow elements (hollow elements 2) having lower densities by removing second hollow elements (hollow elements 3, 4) having higher densities from a group of first hollow elements (hollow elements 2) including hollow elements which are different in density. The first step may be executed in various ways as described above. Firstly, a specific example of the first step of sorting-out the hollow elements will be described. Then, a specific example of the second step of creating the acoustic matching member using the hollow elements after sorting-out, a specific example of the ultrasonic transmitter/receiver unit incorporating the acoustic matching member, and a specific example of the ultrasonic flow meter device, will be described.

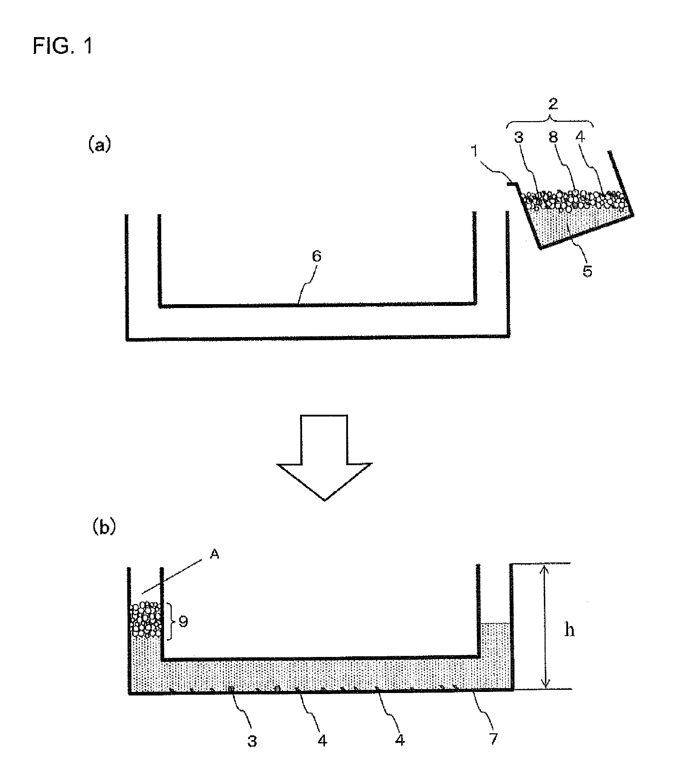

Fig. 1 (a-b) is view showing the steps of removing hollow elements (second hollow elements) having higher densities according to Embodiment 1 of the present invention.

As shown in Fig. 1(a), a container 1 contains a group of hollow elements (first hollow elements) 2 before sorting-out, including normal hollow elements (third hollow elements) 8, hollow elements 3 having higher densities, hollow elements 4 having cracks, and others, and a liquid 5 having a higher density than the normal hollow elements 8, in a state in which they are mixed. Then, the liquid 5 mixed with the hollow elements 2 before sorting-out, is injected into a U-shaped pipe 6. That is, the hollow elements 2 before sorting-out and the liquid 5 are stored into the pipe 6 and mixed therein. As a result, as shown in Fig. 1(b), the hollow elements 3 having higher densities than the liquid 5, the hollow elements 4 having cracks (the hollow elements 3 and the hollow elements 4 will be collectively referred to as "second hollow elements"), etc., move down to a pipe bottom portion 7. On the other hand, in the vicinity of a pipe liquid level (surface), which is expressed as A, the hollow elements 9 after sorting-out, are floating, most of which are the normal hollow elements 8, as a result of the removal of the hollow elements 3 having higher densities, the hollow elements 4 having cracks, etc.. This state is kept stationarily for a specified time. In this way, the hollow elements 3 having higher densities, and the hollow elements 4 having cracks, move down, and thus, the normal hollow elements 8 can be separated from the hollow elements 3 having higher densities and the hollow elements 4 having cracks.

If a height **h** of the pipe, which is shown in Fig. 1(b), is set greater, it becomes possible to reduce a time taken for separating the normal hollow elements 8 from the hollow elements 3 having higher densities and the hollow elements 4 having cracks. Or, if a plurality of U-shaped pipes are arranged in parallel, the hollow elements can be treated successively. Or, if the liquid 5 is supplied continuously while mixing air bubbles into the liquid 5, effects achieved by stirring of the liquid (i.e., separating action of the hollow elements by stirring of the liquid), can be expected.

Examples of a material of the hollow elements may be inorganic materials, which are alumina bubbles, glass microballoons, shirasu balloons, etc., or organic materials which are phenolic microballoons, etc.. As an example of the liquid having a higher density, water may be used. Or, as an example of the liquid having a higher density, alcohol, etc., which is typified by methanol, ethanol, isopropyl alcohol, etc., may be used. Or, as an example of the liquid having a higher density, hydrocarbon such as pentane, an ether compound such as diethyl ether, may be used. In other words, the example of the liquid having a higher density is not particularly limited so long as it has a higher density than the normal hollow elements 8. The materials for use in the present invention and their bulk densities are shown in Table 1.

[Table 1]

| Kinds of hollow elements and their bulk densities | |
|---|---|
| Name | Bulk densities |
| Alumina bubbles | 0.6 to 0.8 |
| Glass microballoons | 0.16 to 0.22 |
| Shirasu balloons | 0.14 to 0.32 |
| Phenolic balloons | 0.10 to 0.15 |

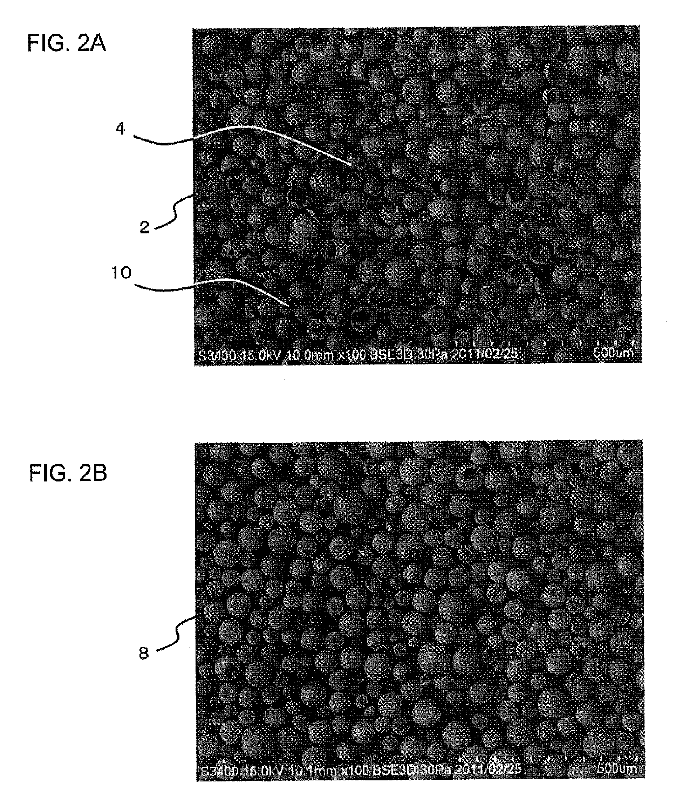

Fig. 2A is a SEM photograph of hollow elements before removing the hollow elements 3 having higher densities and the hollow elements 4 having cracks (hereinafter these hollow elements will be referred to as the hollow elements 2 before sorting-out). Fig. 2B is a SEM photograph of hollow elements according to Embodiment 1 of the present invention (hereinafter these hollow elements will be referred to as hollow elements 9 after sorting-out) obtained by removing the hollow elements 3 having higher densities and the hollow elements 4 having cracks. The SEM photographs show examples in which the glass microballoons are used as the hollow elements. As described above, other hollow elements may be used as the hollow elements of the present invention.

On a surface of each of the hollow elements, a coating layer of a coupling agent is formed by chemically binding the coupling agent as a surface reforming material. The coupling agent has a structure in which it has a group which is easily hydrolyzed at one end and a functional group which easily reacts with a resin at the other end. In the present embodiment, as the surface reforming material, a chrome aqua chloro hydroxy methacrylic acid complex compound, which is a chrome based coupling agent, is used. This can improve a fluidity of the hollow elements and an affinity with the resin used as the binding agent.

Other coupling agent may be used so long as it is able to maintain the fluidity of the hollow elements and the affinity which causes a binding force between the hollow elements and the binding agent. For example, as the coupling agent, high polymer compound(s) of one or more kinds which is/are selected from a group consisting of a silane based compound, a titanate based compound, and a phosphoric acid based compound, may be used. The coating layer of the surface reforming material is about several angstroms.

From a comparison between the SEM photograph of Fig. 2A and the SEM photograph of Fig. 2B, by performing the sorting-out process according to the present embodiment, the hollow elements 3 having higher densities and the hollow elements 4 having cracks, which are included in the hollow elements 2 before sorting-out, can be significantly reduced. In a case where the hollow elements 2 before sorting-out, shown in Fig. 2A, are used for the acoustic matching member incorporated into the ultrasonic transmitter/receiver unit, the binding agent or the like is filled into the cracks of the hollow elements 4, or inside of the hollowing elements having partially broken and having holes 10, through the holes 10. Because of this, the binding agent having a higher density enter a portion which should be voids, which results in a higher density of the acoustic matching member.

Therefore, depending on a manufacturing lot, a transportation process, a stored condition, etc., a ratio of the hollow elements 3 having higher densities and the hollow elements 4 having cracks to the hollow elements 2 before sorting-out is varied, which is a major cause of non-uniformity of the density of the acoustic matching member. However, by performing the sorting-out process of the present embodiment and using the hollow elements 9 after sorting-out, which are obtained by removing the hollow elements 3 having higher densities and the hollow elements 4 having cracks, it becomes possible to lessen non-uniformity of the density of the acoustic matching member, and fix the characteristics of the acoustic matching member.

Next, the manufacturing method (second step) of the acoustic matching member incorporating the hollow elements 9 after sorting-out will be described.

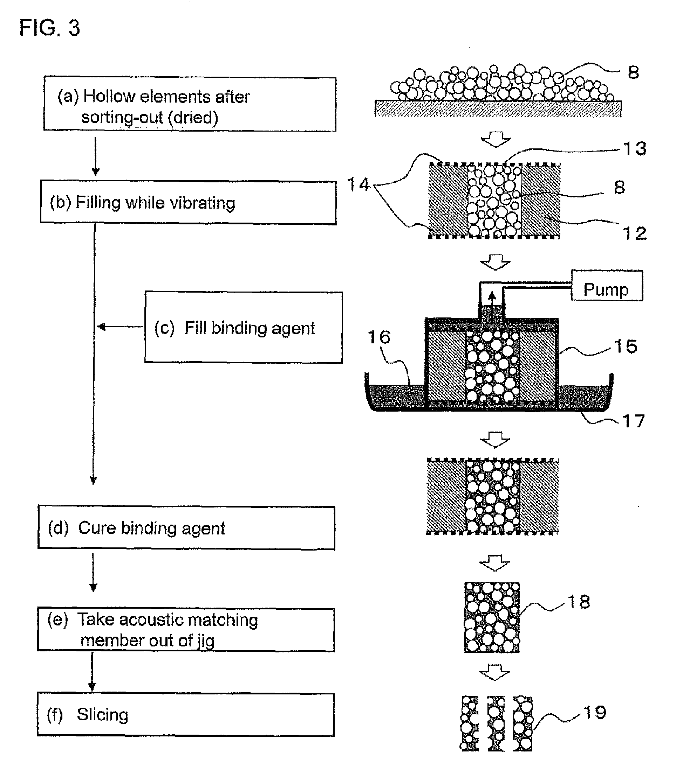

Fig. 3 is a view showing the step (second step) of manufacturing the acoustic matching member according to Embodiment 1 of the present invention.

In the step (a) of Fig. 3, as a result of the above stated sorting-out process (first step) of the hollow elements for removing the hollow elements 3 having higher densities and the hollow elements 4 having cracks, the hollow elements 9 after sorting-out, can be obtained. The hollow elements 9 are now in a dried state after they have been treated by a suitable means.

In the step (b) of Fig. 3, the hollow elements 9 after sorting-out are injected into a through-hole 13 provided in a filling jig 12, and a vibration is applied to the entire filling jig 12. This allows the hollow elements 9 after sorting-out to be applied with an acceleration caused by the vibration, which results in a situation in which the hollow elements are filled more densely. If the sorting-out process (first step) according to the present embodiment is not carried out, and the hollow elements 9 include the hollow elements 4 having cracks, sliding between the hollow elements is impeded, and as a result, a filling efficiency of the hollow elements is reduced.

In the step(c) of Fig. 3, the binding agent is filled into the through-hole 13. Specifically, after filters 14 are disposed at upper and lower sides of the through-hole 13 of the filling jig 12, the filling jig 12 is installed into a suction container 15. Then, the suction container 15 is disposed on a container 17 filled with the binding agent 16 such that the lower filter 14 is immersed in the binding agent 16. Then, the binding agent 16 in the container 17 is suctioned from the upper filter 14 through the through-hole 13 by a pump. In the present embodiment, as the binding agent 16, an epoxy resin which is a thermosetting resin compound, is used. This is because the epoxy resin does not change its shape much after being cured, and is stable for a long period of time. In addition, the epoxy resin has a high affinity with the coupling agent as the surface reforming material applied as a coating layer to the surfaces of the hollow elements. Therefore, the binding force with the hollow elements is improved.

The epoxy resin used is a two-pack curable epoxy resin. A based compound (base resin) is bisphenolic A (BPA) liquid epoxy resin. A curing agent (harder) is tetrahydromethylphthalic anhydride. The base compound and the curing agent are mixed with each other with an optimal mixing ratio and a mixture of them is used as the epoxy resin. However, the epoxy resin is not limited to the two-pack curable epoxy resin, and a one-pack curable resin may be used so long as an aim is achieved.

In the step (d) of Fig. 3, the epoxy resin which is the binding agent 16 is cured in a state in which the epoxy resin is filled in the filling jig 12. Then, in the step(e) of Fig. 3, the acoustic matching member 18 of a rod shape with the epoxy resin cured is taken out of the filling jig 12.

Finally, in the step(f) of Fig. 3, the cured rod-shape acoustic matching member 18 is sliced, thereby obtaining the acoustic matching member 19 of a desired dimension.

Hereinafter, a description will be given of the density of the acoustic matching member, and the characteristics of the ultrasonic transmitter/receiver unit configured to include the acoustic matching member, in comparison with the acoustic matching member manufactured by the conventional method.

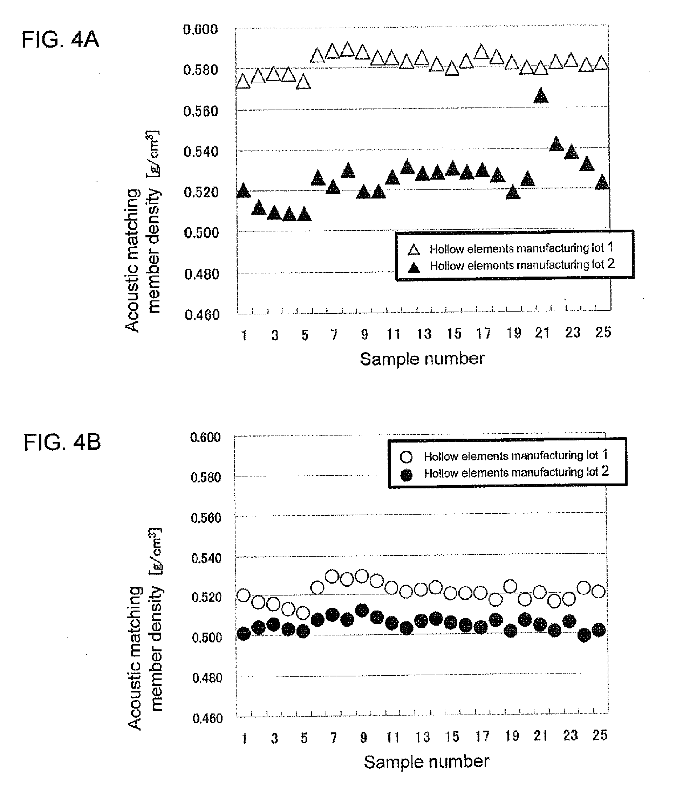

Fig. 4A is a graph showing the density of the acoustic matching member incorporating the conventional hollow elements (for which the sorting-out process is not performed), and Fig. 4B is a graph showing the density of the acoustic matching member incorporating the hollow elements after the sorting-out process of Embodiment 1 has been performed.

In the graphs of Figs. 4A and 4B, a vertical axis indicates the density of the acoustic matching member 19 and a horizontal axis indicates a sample number (n: number) of the acoustic matching member 19. Each of the graphs of Figs. 4A and 4B indicates the density of the acoustic matching members 19 manufactured using two kinds of the hollow elements obtained from two manufacturing lots (lot 1, lot 2). The sample number indicates the sample number of acoustic matching member 19 formed by slicing the rod-shaped acoustic matching member 18 manufactured using each kinds of elements.

As shown in Fig. 4A, in the case of the acoustic matching member incorporating the hollow elements of the conventional manufacturing method, there is a significant difference in density of acoustic matching member between the lot 1 and the lot 2. In other words, there is great non-uniformity of the density of the acoustic matching member, depending on the manufacturing lot of the hollow elements. In addition, it is found that there is a significant difference in density among the samples, even in the same lot (see e.g., lot 2). By comparison, in the case of the acoustic matching member incorporating the hollow elements of the manufacturing method of the present invention, as shown in Fig. 4B, non-uniformity of the density due to the difference between the lots or the difference among the samples within the same lot is lessened, and the density of the acoustic matching member is decreased as a whole.

From the above result, it can be seen that the hollow element manufacturing lot 1 includes the hollow elements 3 having higher densities or the hollow elements 4 having cracks more than the hollow element manufacturing lot 2. In addition, there is non-uniformity of the density in the acoustic matching member manufactured using the conventional method. By comparison, by using the hollow elements 9 after the sorting-out process of the present embodiment is performed to remove the hollow elements 3 having higher densities or the hollow elements 4 having cracks, it become possible to lessen non-uniformity of the density of the acoustic matching member 19 and to decrease the density of the acoustic matching member 19.

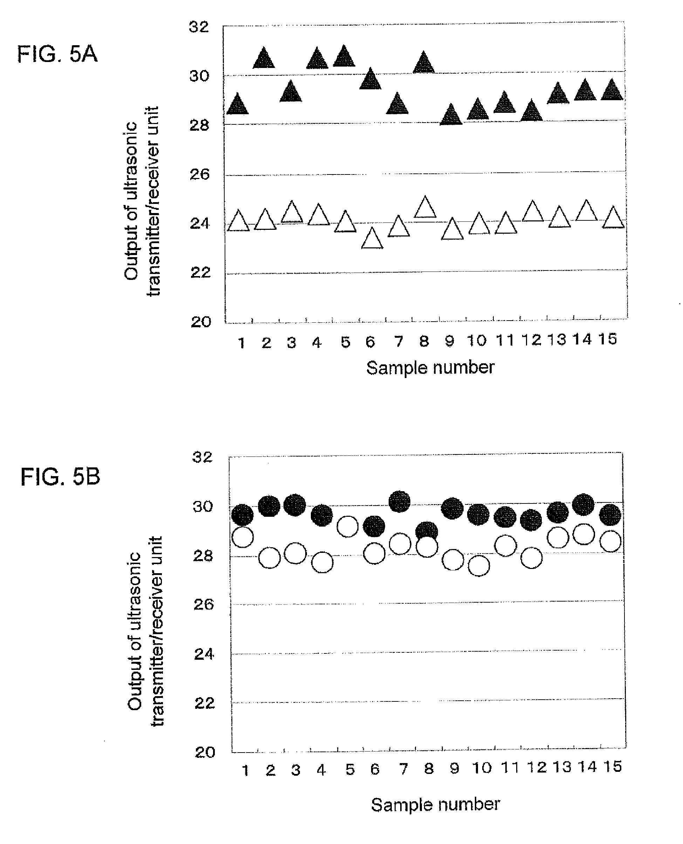

Fig. 5A is a graph showing the output of an ultrasonic transmitter/receiver unit manufactured using the acoustic matching member incorporating the conventional hollow elements (for which the sorting-out process is not performed). Fig. 5B is a graph showing the output of an ultrasonic transmitter/receiver unit manufactured using the acoustic matching member incorporating the hollow elements after the sorting-out process of Embodiment 1 is performed. In the graphs of Figs. 5A and 5B, a vertical axis indicates the output of the ultrasonic transmitter/receiver unit and a horizontal axis indicates a sample number. As can be seen from Fig. 5A and 5B, non-uniformity of the output characteristics is made less and the output is greater in the ultrasonic transmitter/receiver unit of the present embodiment than the ultrasonic transmitter/receiver unit incorporating the acoustic matching member manufactured by the conventional manufacturing method. As a result, fixed (invariable) characteristics and higher sensitivity of the ultrasonic transmitter/receiver unit can be implemented, and stable and high-accurate flow measurement can be carried out when the ultrasonic transmitter/receiver unit is incorporated into an ultrasonic flow meter device.

Hereinafter, the manufacturing method of the ultrasonic transmitter/receiver unit will be described.

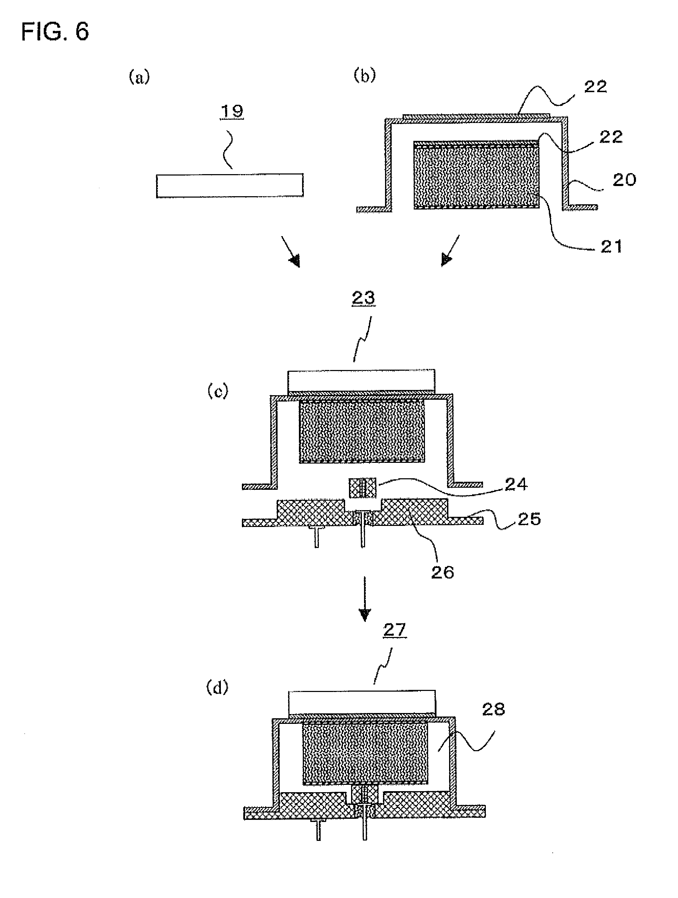

Fig. 6 is a cross-sectional view showing the procedure for manufacturing the ultrasonic transmitter/receiver unit according to the present embodiment. In the step (a) of Fig. 6, the acoustic matching member 19 adjusted to have a predetermined thickness is created. As the creating method, the method described with reference to Fig. 3 may be used. Specifically, the glass balloons as a void forming material are filled into a container having a specified dimension while vibrating the container, and then are impregnated with the epoxy resin which is the thermosetting resin within the container. After the epoxy resin is cured by heating or the like, the resulting body is sliced. Slicing is performed by, for example, dicing or wrapping. The thickness of the acoustic matching member is adjusted such that the acoustic matching member resonates with a piezoelectric substrate in a specified frequency.

In the step (b) of Fig. 6, a thermosetting adhesive used as a binding means 22 is applied to one end surface of a piezoelectric substrate 21. Also, in the same manner, the binding means 22 is applied to an outer surface of a top surface of a tubular case 20 with a top portion, having an opening.

As the thermosetting adhesive used as the binding means 22, the epoxy resin, a phenolic resin, a polyester resin, a melamine resin, etc., may be used. The thermosetting adhesive is not particularly limited so long as it is the thermosetting resin. In some cases, a thermoplastic resin having a glass-transition temperature which is equal to or lower than 70 degrees C which is a high-use temperature, may be used as the adhesive.

In the step (c) of Fig. 6, the piezoelectric substrate 21, the tubular case 20, and the acoustic matching member 19 are positioned such that they are stacked together and bonded together. Specifically, the piezoelectric substrate 21 is bonded to the inner surface of the top surface of the tubular case 20, and the acoustic matching member 19 is bonded to the outer surface of the top surface of the tubular case 20. At this time, the piezoelectric substrate 21, the tubular case 20, and the acoustic matching member 19 are applied with a pressure of about 1 to 10kg/cm$^2$, and secured together, and the thermosetting adhesive used as the binding means 22 is cured. The binding means 22 is cured in a general heating bath at about 150 degrees C and in about 30 minutes. Since the binding means 22 is cured in this way, a semifinished product 23 having a unitary structure is produced. In the step (c) of Fig. 6, furthermore, a terminal plate 26 inserted with and attached with an electric-conductor means 24 is welded to the semifinished product 23 at a flange 25 of the terminal plate 26. This allows the semifinished product 23 and the terminal plate 26 to be electrically connected to each other at the flange 25.

In the step (d) of Fig. 6, there is shown a finished state of an ultrasonic transmitter/receiver unit 27 manufactured through the above mentioned steps. When the semifinished product 23 and the flange 25 of the terminal plate 26 are welded to each other, an argon gas, a nitrogen gas, a helium gas, etc., which is an inert (inactive) gas may be filled into an internal closed space 28. This makes it possible to lessen degradation of an electrode of the piezoelectric substrate 21, and degradation of a portion at which the piezoelectric substrate 21 and the tubular case 20 are joined together.

The ultrasonic transmitter/receiver unit 27 described above may be used as an ultrasonic flow meter device for measuring a flow (rate) of a measurement target fluid. Hereinafter, a description will be given of a calculation method and an operation principle in a case where the ultrasonic flow meter device measures the flow of the target measurement fluid.

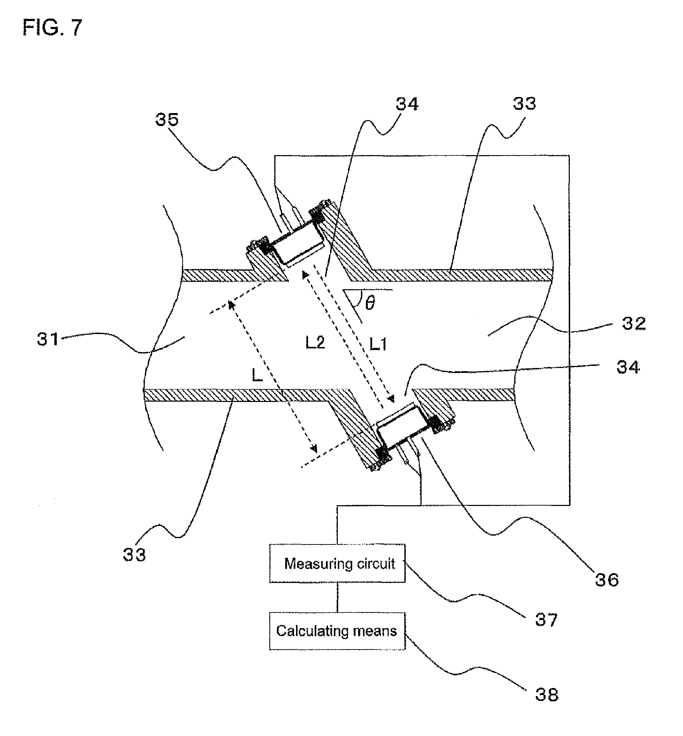

Fig. 7 is a partial cross-sectional view of the ultrasonic flow meter device according to the present embodiment. As shown in Fig. 7, a fluid passage 33 used to flow the fluid from one opening end 31 to the other opening end 32 is a pipe used to flow the measurement target fluid. The fluid passage 33 is provided with opening portions 34 to allow an ultrasonic wave to propagate in an oblique direction with respect to the fluid passage 33. On an extended line of the opening portion 34, ultrasonic transmitter/receiver units 35, 36 are fastened to the fluid passage 33 such that they face each other. In other words, the ultrasonic transmitter/receiver units 35, 36 are attached to the fluid passage 33 (pipe) at an upstream side (one end side) and at a downstream side (the other end side). The upstream ultrasonic transmitter/receiver unit 35 is placed such that its acoustic matching member faces in an oblique direction toward the downstream side, while the downstream ultrasonic transmitter/receiver unit 36 is placed such that its acoustic matching member faces in an oblique direction toward the upstream side. As a result, the acoustic matching member of the upstream ultrasonic transmitter/receiver unit 35 and the acoustic matching member of the the downstream ultrasonic transmitter/receiver unit 36 face each other through the opening portions 34 formed in the fluid passage 33. Terminals of the ultrasonic transmitter/receiver units 35, 36 are connected to an ultrasonic wave propagation time measuring circuit (measuring circuit) 37, which is connected to a calculating means 38.

In Fig. 7, L1 indicates a propagation path of the ultrasonic wave propagating from the ultrasonic transmitter/receiver unit 35 placed at the upstream side, while L2 indicates a propagation path of the ultrasonic wave propagating from the ultrasonic transmitter/receiver unit 36 placed at the downstream side.

In Fig. 7, V indicates a flow velocity of the fluid flowing through the fluid passage 33, C (not shown) indicates a velocity of the ultrasonic wave propagating through the fluid in a state in which its fluid velocity is zero, and θ indicates an angle formed between a direction in which the fluid flows and a direction in which the ultrasonic wave propagates.

A propagation time t1 of the ultrasonic pulse transmitted from the ultrasonic transmitter/receiver unit 35 to the ultrasonic transmitter/receiver unit 36 is represented by:

$$t1 \quad = \quad L/(C + V\cos\theta) \qquad (1)$$

A propagation time t2 of the ultrasonic pulse transmitted from the ultrasonic transmitter/receiver unit 36 to the ultrasonic transmitter/receiver unit 35 is represented by:

$$t2 \quad = \quad L/(C - V\cos\theta) \qquad (2)$$

When the velocity C of the ultrasonic wave is deleted from the formulas (1) and (2), derived is:

$$V \quad = \quad L/2\cos\theta \, (1/t1 - 1/t2) \qquad (3)$$

Therefore, if L and θ are known, the flow velocity V is derived by measuring t1 and t2 by using the ultrasonic wave propagation time measuring circuit 37. If necessary, a flow (rate) Q can be derived by multiplying the flow velocity V by a cross-sectional area S of the fluid passage 33 and a compensation coefficient K. The calculating means 38 of Fig. 7 calculates the flow Q (= KSV).

As described above, the manufacturing method of the acoustic matching member according to the present embodiment is such that the acoustic matching member is placed on a piezoelectric transducer (e.g., in the present embodiment, piezoelectric transducer having a structure in which the piezoelectric substrate 21 is bonded to the inner surface of the top surface of the tubular case 20), to construct the ultrasonic transmitter/receiver unit. Specifically, this manufacturing method includes the steps of obtaining the group of the third hollow elements having lower densities by removing the second hollow elements having higher densities from the group of the first hollow elements including the hollow elements which are different in density, and creating the acoustic matching member using the group of the third hollow elements and the binding agent. In this way, the second hollow elements having higher densities (including the hollow elements having cracks) are removed from the first hollow elements. Therefore, it is possible to provide the acoustic matching member having fixed (invariable) characteristics without being affected by the manufacturing lot or the transportation process of the hollow elements. In addition, the characteristics of the ultrasonic transmitter/receiver unit manufactured using the acoustic matching member can be fixed, and high-accurate flow measurement can be carried out.

In the present embodiment, the step of obtaining the group of the third hollow elements includes the step of causing the group of the first hollow elements to move down in the liquid having a higher density than the third hollow elements having lower densities, and the step of separating the third hollow elements floating on a liquid surface, from the liquid. With these steps, the second hollow elements having higher densities are efficiently removed from the first hollow elements. Thus, it is possible to provide the acoustic matching member having fixed characteristics without being affected by the manufacturing lot or the transportation process of the hollow elements. Therefore, the characteristics of the ultrasonic transmitter/receiver unit manufactured using the acoustic matching member can be fixed, and high-accurate flow measurement can be carried out.

In the present embodiment, in the step of causing the group of the first hollow elements to move down in the liquid having a higher density than the first hollow elements, the liquid and the first hollow elements are stored into the pipe and mixed therein. This makes it possible to continuously remove the second hollow elements having higher densities from the first hollow elements.

Also, in the present embodiment, the manufacturing method comprises the step of pre-coating surfaces of the first hollow elements, with the coupling agent. This can improve an adhesivity between the hollow elements and the binding agent. Therefore, reliability of a moisture resistance is improved. In addition, a sliding characteristic of the hollow elements is improved because of the coupling agent applied as the coating layer to the surfaces. Therefore, in the step of filling the hollow elements, the hollow elements are filled efficiently, and its filling efficiency is improved. As a result, the density of the acoustic matching member is decreased, the transmission/reception sensitivity of the ultrasonic transmitter/receiver unit incorporating the acoustic matching member is improved, and high-accurate flow measurement is achieved.

Since the coupling agent is selected from the group consisting of the chrome based compound, the silane based compound, the titanate based compound, and the phosphoric acid based compound, the coupling agent can be easily applied as the coating layer to the surfaces of the hollow elements. The coupling agent applied as the coating layer to the surfaces of the hollow elements can improve the sliding characteristic of the hollow elements.

(Embodiment 2)

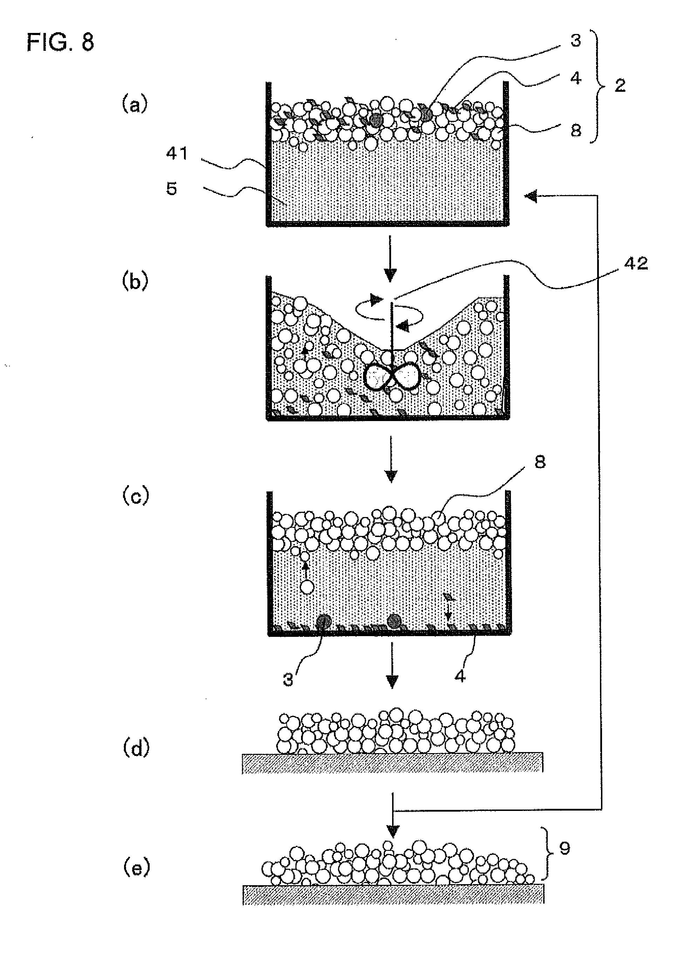

Fig. 8 is a cross-sectional view showing the step of removing the hollow elements having higher densities and the hollow elements having cracks according to the present embodiment.

In the step (a) of Fig. 8, the hollow elements 2 before sorting-out, including the normal hollow elements 8, the hollow elements 3 having higher densities, the hollow elements 4 having cracks, and others are fed into the container 41, and the liquid having a higher density than the normal hollow elements 8 is injected into the container 41. In the step (b) of Fig. 8, a stirring vane 42 is inserted into an interior of the container 41 to stir the liquid 5. This forcibly causes the normal hollow elements 8, the hollow elements 3 having higher densities, and the hollow elements 4 having cracks, to move down in the liquid 5 for a certain time. At this time, preferably, the entire container 41 is placed in a pressure-reduced atmosphere. The pressure-reduced atmosphere allows the hollow elements having small cracks to be efficiently removed.

Then, in the step (c) of Fig. 8, the container is placed stationarily for a specified time. As a result, the hollow elements 3 having higher densities than the liquid 5, and the hollow elements 4 having cracks move down in the liquid, whereas the normal hollow elements 8 float up onto a liquid surface. In the step (d) of Fig. 8, the floating hollow elements are taken out. By repeating a series of the step (a) of Fig. 8 to the step (d) of Fig. 8 plural times, the hollow elements 3 having higher densities and the hollow elements 4 having cracks can be removed more surely. In the step(e) of Fig. 8, the hollow elements after the removal in the step (d) of Fig. 8 are dried in an oven, thereby obtaining the hollow elements 9 after the sorting-out process. By using the hollow elements 9 obtained as described above, it becomes possible to efficiently fill the hollow elements in a subsequent step of filling the hollow elements.

The steps shown in Fig. 8 are applicable to hollow elements which are not coated with the coupling agent, as well as the hollow elements 2 before the sorting-out, whose surfaces are pre-coated with the coupling agent. Or, as the liquid 5 filled in the container 41 in the step (a) of Fig. 8 to the step (c) of Fig. 8, a liquid dissolved with the coupling agent may be used, and the hollow elements which are not coated with the coupling agent may be injected into this liquid. In this case, concurrently with the sorting-out process of the hollow elements, a process for coating the surfaces of the hollow elements with the coupling agent can be carried out. In this way, inexpensive hollow elements (hollow elements which are not coated with the coupling agent) can be used, and the hollow elements having higher densities can be removed while coating the surfaces of the hollow elements with the coupling agent. As the coupling agent, the same coupling agent as that of Embodiment 1 can be used, and therefore description thereof will be omitted.

As described above, in the present embodiment, in the step of causing the first hollow elements (hollow elements 2) to move down in the liquid having a higher density than the third hollow elements (hollow elements 8), the liquid and the first hollow elements are stirred and mixed in the interior of the container. The acoustic matching member created in this way includes the hollow elements obtained by efficiently removing the hollow elements having higher densities and the hollow elements having cracks, from the first hollow elements.

In accordance with the present embodiment, the step of causing the first hollow elements to move down in the liquid having a higher density than the third hollow elements is carried out in the pressure-reduced atmosphere. Thus, the hollow elements 4 having small cracks can be efficiently removed.

In accordance with the present embodiment, the step of causing the first hollow elements to move down in the liquid having a higher density than the third hollow elements includes the step of causing the first hollow elements to move down in the liquid dissolved with the coupling agent, and the step of separating the third hollow elements floating on the liquid surface, from the liquid. This makes it possible to remove the second hollow elements (hollow elements 3, 4) having higher densities, and coat the surfaces of the hollow elements with the coupling agent. In other words, inexpensive hollow elements can be used and hollow elements having higher densities can be removed. As a result, it is possible to attain the acoustic matching member which has a fixed density and is inexpensive.

**Industrial Applicability**

As should be appreciated from the above, the ultrasonic flow meter device of the present invention can attain a higher productivity and perform high-accurate flow measurement, and therefore is applicable to uses of household flow meter devices, industrial flow meter devices, etc..

**Reference Signs List**

| | |
|---|---|
| 2 | hollow elements before sorting-out (first hollow elements) |
| 3 | hollow elements having higher densities (second hollow elements) |
| 4 | hollow elements having cracks (second hollow elements) |
| 5 | liquid |
| 6 | pipe |
| 8 | normal hollow elements (third hollow elements) |
| 19 | acoustic matching member |
| 20 | tubular case with a top |
| 21 | piezoelectric substrate |
| 24 | electrically-conductive means |
| 26 | terminal plate |
| 27, 35, 36 | ultrasonic transmitter/receiver unit |
| 37 | ultrasonic wave propagation time measuring circuit |
| 38 | calculating means |

**Claims**

1. A method of manufacturing an acoustic matching member which is placed on a piezoelectric transducer to construct an ultrasonic transmitter/receiver unit together with the piezoelectric transducer, the method comprising the steps of:

obtaining a group of third hollow elements having lower densities by removing second hollow elements having higher densities from a group of first hollow elements including hollow elements which are different in density; and creating the acoustic matching member using the group of the third hollow elements and a binding agent.

2. The method of manufacturing the acoustic matching member according to claim 1, wherein the step of obtaining the group of the third hollow elements includes the step of causing the group of the first hollow elements to move down in a liquid having a higher density than the third hollow elements having lower densities, and the step of separating the third hollow elements floating on a liquid surface, from the liquid.

3. The method of manufacturing the acoustic matching member according to claim 2, wherein in the step of causing the group of the first hollow elements to move down in the liquid having a higher density than the first hollow elements, the liquid and the first hollow elements are stored into a pipe and mixed therein.

4. The method of manufacturing the acoustic matching member according to claim 2, wherein in the step of causing the group of the first hollow elements to move down in the liquid having a higher density than the third hollow elements, the liquid and the first hollow elements are stirred and mixed in an interior of a container.

5. The method of manufacturing the acoustic matching member according to any one of claims 2 to 4, wherein the step of causing the group of the first hollow elements to move down in the liquid having a higher density than the third hollow elements, is carried out in a pressure-reduced atmosphere.

6. The method of manufacturing the acoustic matching member according to any one of claims 1 to 5, further comprising the step of:

pre-coating surfaces of the first hollow elements with a coupling agent.

7. The method of manufacturing the acoustic matching member according to any one of claims 2 to 5, wherein the step of causing the group of the first hollow elements to move down in the liquid having a higher density than the third hollow elements includes the step of causing the first hollow elements to move down in the liquid dissolved with a coupling agent and the step of separating the third hollow elements floating on the liquid surface, from the liquid.

8. The method of manufacturing the acoustic matching member according to claim 6 or 7, wherein the coupling agent is a high polymer compound selected from a group consisting of a chrome based compound, a silane based compound, a titanate based compound, and a phosphoric acid based compound.

9. An acoustic matching member placed on a piezoelectric transducer to construct an ultrasonic transmitter/receiver unit together with the piezoelectric transducer, the acoustic matching member being manufactured by the manufacturing method according to any one of claims 1 to 8.

10. An ultrasonic transmitter/receiver unit comprising:

a tubular metal case with a top portion, having an opening; a piezoelectric substrate accommodated into the case; a terminal connected to the piezoelectric substrate via an electrically-conductive means; and

a terminal plate which closes the opening of the case and supports the terminal such that the terminal protrudes to outside, the ultrasonic transmitter/receiver unit being configured such that the acoustic matching member as recited in claim 9 is attached to an ultrasonic wave radiation surface of the case.

11. An ultrasonic flow meter device comprising:

a flow measuring section through which a measurement target fluid flows;
a pair of ultrasonic transmitter/receiver units placed at an upstream side and a downstream side of the flow measuring section such that the ultrasonic transmitter/receiver units face each other;
an ultrasonic wave propagation time measuring circuit for measuring a propagation time of an ultrasonic wave between the pair of ultrasonic transmitter/receiver units; and
a calculating means for calculating a flow of the measurement target fluid per unit time, based on the propagation time of the ultrasonic wave;
wherein each of the ultrasonic transmitter/receiver units is the ultrasonic transmitter/receiver unit according to claim 10.

FIG. 1

(a)

(b)

FIG. 2A

FIG. 2B

FIG. 3

(a) Hollow elements after sorting-out (dried)

(b) Filling while vibrating

(c) Fill binding agent

(d) Cure binding agent

(e) Take acoustic matching member out of jig

(f) Slicing

FIG. 4A

FIG. 4B

FIG. 5A

Output of ultrasonic transmitter/receiver unit

Sample number

FIG. 5B

Output of ultrasonic transmitter/receiver unit

Sample number

FIG. 6

(a)

19

(b)

22
22
20
21

23

(c)

24
25
26

27

(d)

28

FIG. 7

FIG. 8

(a)

(b)

(c)

(d)

(e)

## FIG. 9

(a)

52
51
54

(b)

54
53

(c)

Vacuum suctioning
58
60
59
56   55   57

(d)

58

(e)

Heating and
curing

(f)

63
62

<table>
<tr><td colspan="2" align="center">**INTERNATIONAL SEARCH REPORT**</td><td>International application No.</td></tr>
<tr><td colspan="2"></td><td>PCT/JP2012/004515</td></tr>
</table>

**A. CLASSIFICATION OF SUBJECT MATTER**
*H04R17/00*(2006.01)i, *G01F1/66*(2006.01)i, *H04R31/00*(2006.01)i

According to International Patent Classification (IPC) or to both national classification and IPC

**B. FIELDS SEARCHED**

Minimum documentation searched (classification system followed by classification symbols)
H04R17/00, G01F1/66, H04R31/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2002-125296 A (Matsushita Electric Industrial Co., Ltd.),<br>26 April 2002 (26.04.2002),<br>paragraphs [0042] to [0047]; fig. 7<br>& US 6545947 B1      & EP 1170978 A1<br>& WO 2001/037609 A1   & AU 1308601 A<br>& CN 1342385 A       & AT 548860 T | 1-6,8-11<br>7 |
| Y | JP 2006-262246 A (Matsushita Electric Industrial Co., Ltd.),<br>28 September 2006 (28.09.2006),<br>paragraph [0009]; fig. 1<br>(Family: none) | 1-6,8-11 |

[X] Further documents are listed in the continuation of Box C.  [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 October, 2012 (03.10.12) | Date of mailing of the international search report<br>16 October, 2012 (16.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/004515 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-287405 A  (Matsushita Electric Industrial Co., Ltd.), 19 October 2006 (19.10.2006), paragraphs [0020], [0021]; fig. 1 (Family: none) | 6,8-11 |
| A | JP 2006-174992 A  (Matsushita Electric Industrial Co., Ltd.), 06 July 2006 (06.07.2006), entire text; all drawings (Family: none) | 1-11 |
| A | JP 9-238399 A  (Hitachi Medical Corp.), 09 September 1997 (09.09.1997), entire text; all drawings & US 5886454 A | 1-11 |

Form PCT/ISA/210 (continuation of second sheet) (July 2009)

**EP 2 733 959 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4140359 B